# EUROPEAN PATENT APPLICATION

(11) **EP 4 703 912 A1**
(43) Date of publication of application: **04.03.2026**
(21) Application number: 25198784.8
(22) Date of filing: 28.08.2025
(51) Int. Cl.: G06F 16/783, G06V 20/40

(54) **APPARATUS AND METHOD OF VIDEO TRACKING**

(30) Priority: 30.08.2024 GB 202412714; 12.09.2024 GB 202413441
(71) Applicant: Sony Interactive Entertainment Inc., Tokyo 108-0075 (JP)
(72) Inventor: BRISLIN, Simon Andrew St. John, London, W1F 7LP (GB); RYAN, Nicholas Anthony Edward, London, W1F 7LP (GB); SWANN, Andrew, London, W1F 7LP (GB); PANESAR, Pritpal Singh, London, W1F 7LP (GB); WALKER, Andrew William, London, W1F 7LP (GB)
(74) Representative: Fish & Richardson P.C.

(57) **Abstract**

A method of identifying a predetermined event within a sequence of images comprises the steps of obtaining a database of data items each representing one of a plurality of predetermined events, identifying candidate event images within the sequence of images, comparing data representing at least a first a candidate event image with one or more data items in the database, and identifying that a predetermined event has occurred within the sequence of images if a candidate event image matches a data item in the database to a predetermined matching threshold degree.

## Description

The present invention relates to an apparatus and method of video tracking.

The playing of video games has become an increasingly social activity, with users wishing to post their experiences to social media, or share their in game story with friends. However, it can be difficult to simultaneously play a video game and selectively record footage to share, particularly for exciting or surprising content when the main focus of the user will be on reacting to the game.

Furthermore, when seeking to summarise progress within a game, or track events, it can be difficult to identify these events within the many hours of user-directed game content that is generated during play.

Embodiments of the present application seek to address or mitigate these problems.

### SUMMARY OF THE INVENTION

Various aspects and features of the present invention are defined in the appended claims and within the text of the accompanying description.

In a first aspect, a method of identifying a predetermined event within a sequence of images is provided in accordance with claim 1.

In another aspect, a system for identifying a predetermined event within a sequence of images is provided in accordance with claim 17.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device configured as a system for identifying a predetermined event within a sequence of images, in accordance with embodiments of the present description;
- Figures 2A-2D are schematic diagrams of difference measurements between successive images, in accordance with embodiments of the present description;
- Figure 3A is an illustration of images that may result in a false-positive match, in accordance with embodiments of the present description;
- Figure 3B is an illustration of images tested to identify a false-positive match, in accordance with embodiments of the present description;
- Figure 4 is a flow diagram of a method of identifying a scene cut, in accordance with embodiments of the present description; and
- Figure 5 is a flow diagram of a method of identifying a predetermined event within a sequence of images, in accordance with embodiments of the present description.

### DESCRIPTION OF THE EMBODIMENTS

An apparatus and method of video tracking are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

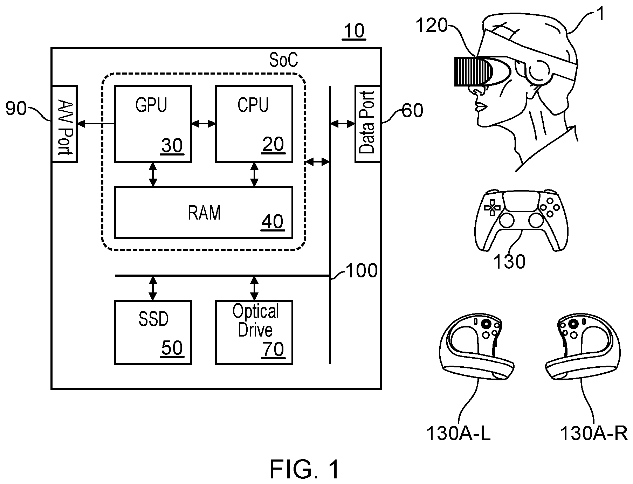

Referring now to the drawings, wherein like reference numerals designate identical or corresponding parts throughout the several views, Figure 1 shows an example apparatus in accordance with embodiments of the present description. As a non-limiting example, the apparatus takes the form of entertainment system 10. Other example apparatuses may include other entertainment systems or videogame consoles, personal computers, phones or tablets, or any device capable of simultaneously playing a videogame and recording footage thereof.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, such as the PlayStation VR 2 'PSVR2', worn by a user 1, or a TV (not shown).

Interaction with the system is typically provided using one or more handheld controllers (130, 130A), such as the DualSense^{®} controller (130) in the case of the PS5, and/or one or more VR controllers (130A-L,R) in the case of the HMD.

### Tracking in-game progress

In videogames, normally the generated / displayed images evolve smoothly as the user moves within the environment of the game. Consequently, normal gameplay is typically not interrupted by cuts between viewpoints. However, such cuts may occur when the game switches to a cut-scene that progresses the story, or when consequences of a certain action are shown. Cuts may also occur when interacting with non-player characters, and also in effect for example when invoking in-game menus such as an inventory or skills menu. Other changes that could be classified as cuts include for games that page between areas (as is common in some 2D platform games and platform adventure so-called 'metroidvania' games), or changes to the player's in-game character's perception, such as switching to a night-vision mode.

As a result, some - but not all - cuts between scenes may be associated with progress within the game.

Hence a first step is to identify cuts between scenes in a robust but computationally cheap manner, and a second step is to evaluate which cuts may correspond to a progress point (or more generally a notable event) within the game.

There two steps are now described in more detail.

### Step 1 - Detection of cuts between scenes

Scene cuts can be regular occurrences within TV and Movies, but are less common in video games, where as noted above they typically signal either the start of a so-called 'cut scene', or a different display mode (for example when interacting with a non-player character), or changing a game mode (for example switching to an inventory or other menu, or to a system menu).

It is desirable to identify such scene cuts in a computationally cheap manner.

Consequently, in embodiments of the present description a method of cut detection comprises generating a perceptual hash of the current image frame and then comparing it to a corresponding hash of at least the previous frame.

A perceptual hash is a method of generating a consistent and small representation an image. The resulting hash (unlike a cryptographic hash) is similar for similar images even if they are not identical.

A simple example is as follows:
i. Take the original image and reduce it to a predetermined size; for example 8x8 pixels or 16x16 pixels (though these are non-limiting examples, and a reduced image may for example preserve a known aspect ratio - for example as a 16x9 pixel image). This reduction removes high frequency image features and preserves only the low frequency structure.
ii. This image can then optionally be made greyscale. Using the 8x8 pixel example above, this reduces the representation of the image to just 64 values (a colour version would be 3x64).
iii. In either case, compute the mean of the greyscale, or of each colour channel.
iv. Then generate a bit sequence by setting a bit for each greyscale value (or colour channel value) according to whether it is above or below the mean. In effect this reduces the image to a 64 bit representation of whether parts of the image are darker than average or lighter than average. The colour version would have 3x64 bits.
v. Finally, optionally construct the hash by turning the 64 bits into a 64-bit integer, using any predetermined and consistent order of the bits. As a non-limiting example from an 8x8 image, the bits could be read left to right, top to bottom, generating an integer using the big-endian convention. A 16x16 bit image would similarly result in a 256 bit hash.

So in summary, the hash process comprises initially removing high frequencies / retaining low frequencies, typically by reducing image size. Then, optionally but preferably reducing colour for example to a greyscale, and then encoding variations in the greyscale image (for example as a binary threshold based on a global mean). The resulting encoding can then be stored as-is as a binary string, or as a hash integer.

A similar perceptual hash aims to achieve the same goal but using the frequency domain, as follows:
i. Again, the original image is reduced in size, but optionally not to the same extent as the first example; for example to a 32x32 image (i.e. roughly 4 times bigger than in the first example). This removes some high frequency elements but not to the same extent as the first example.
ii. Optionally reduce the colour to a greyscale again.
iii. Compute a discrete cosine transform (DCT) of the image (e.g. to generate a 32x32 DCT representing the image in frequencies). Note that reducing the image to 32x32 pixels is primarily done to simplify the DCT calculation; a larger image (e.g. 64x64, or 128x128, or indeed at the native resolution) could similarly be used but would impose an unnecessary computational burden.
iv. Retain only the top left 8x8 values (or from whichever corner corresponds to DC / low frequency); these represent the lowest frequencies in the picture. Hence at this point the frequencies retained by both this technique and the first example are roughly the same, but in this technique the process is performed in the frequency domain and so frequencies are more accurately represented.
v. Again compute the average value of these 8x8 DCT values, this time excluding the first (DC) term, which can be very different to the others.
vi. Again generate a bit sequence by setting a bit for each of the 8x8 DCT values according to whether it is above or below the mean. Again this therefore results in a 64 bit representation that this time indicates the relative presence or absence of low frequency image components.
vii. Finally, again optionally construct the hash by turning the 64 bits into a 64-bit integer using any predetermined and consistent order of the bits. In this case optionally the bits could be read emanating from the corner (DC) position, e.g. (1,1)(2,1)(2,2)(1,2)(3,1)(3,2)(3,3)(2,3)(1,3) and so on using the big-endian convention; this would mean that the lowest frequency elements within the image have the largest impact on the value of the resulting hash number. Again, alternatively 16x16 DCT values could be similarly used to generate a 256 bit hash.

So the two approaches are basically the same, but one computes the hash in the spatial domain (using the reduced picture) and one computes the hash in the frequency domain (using the reduced DCT).

A similar approach in the frequency domain may substitute a wavelet transform for the DCT.

As noted above, 8x8, 16x16 and 32x32 reduced representation 'images' are non-limiting examples only, but are sufficient to characterise the source images in order to detect the relative similarity of successive images.

For successive images, a respective hash is generated using one of the spatial or frequency based approaches above (that is to say, one of these approaches is used consistently). Each hash is then compared at least with the hash of the immediately preceding hash.

This can be done simply by deducting the value of one hash from the other - for example for identical images, hash_t2 - hash_t1 = 0.

Typically for successive images in a video, the hashes will differ. Hence in an example, example hash_t2 - hash_t1 = 20, meaning the difference in the 64-bit values of the hashes is 20.

Where the resulting bit sequence after deduction is treated as a number, this will place greater emphasis on earlier bits in the sequence. For example in the frequency domain version, the values of the bits may thus be considered to have different weights that affects the significance of differences in some bits more than others. The bit ordering scheme disclosed elsewhere herein for the frequency domain hash is an example where the bits related to the lowest frequency features have the highest weight (i.e. the lowest frequency bits become the highest significance bits) so that the change in hash values roughly correlates with structural changes in the image.

Alternatively to interpreting the result as a binary number, the number of different bits in the hashes can just be counted, so that each one has an equal weighting. This may be used for example for a hash based on spatial properties of the image (or indeed for the frequency domain version). Alternatively a different weighting scheme may be used that does not correspond to the weightings implicit in a binary number representation of the hash (e.g. one that has a more gentle weighting in favour of lower frequency DCT components).

In principle, a naive threshold for when successive images correspond to a cut between scenes is when 50% of the bits change (since for uncorrelated images one might assume that there is an even chance of each feature being either above or below the mean threshold and hence a 50/50 change of this being the same between two images).

Hence for a 64 bit sequence, the threshold could be a hamming distance of 32 (i.e. 32 bits that are different values between the hashes of the two images).

Using the hamming distance means that converting the bits into an actual hash number is not necessary (although it may be a convenient way to store the bits), so in effect the 64 bit sequence may not need to be treated as, and operated upon as, a number.

It is possible that for some forms of content there are certain features that tend to persist between scenes, such as long horizontal features e.g. of ground/sky or of floor/wall; for example when looking at different parts of a football pitch. Consequently optionally a weighted hamming distance may be used that alters the contribution of certain bits in either the spatial or frequency based hashes. These bits can be determined empirically. However, such a weighting makes the assessment of the hashes more complex, and for cuts between scenes typically an unweighted comparison may be sufficient. Nevertheless, a threshold hamming distance other than 32 / 50% may be empirically determined in practice, for example based upon the type of content, or the genre or even specific title of game.

In any event, the hash / perceptual hash (hereafter collectively 'hash') is a fast, robust, and low-overhead means to detect a significant differences between successive images.

A noted previously, a cut scene can be detected based on comparing a current hash to an immediately preceding hash, but this may result in the problem that instantaneous events such as a lightning flash or explosion in-game may be misinterpreted as cuts between scenes.

Hence optionally, a comparison over a sequence of images may optionally be used, where the sequence may comprise a number of images suitable to distinguish over in-scene transitory events such as camera flashes, or optionally explosions.

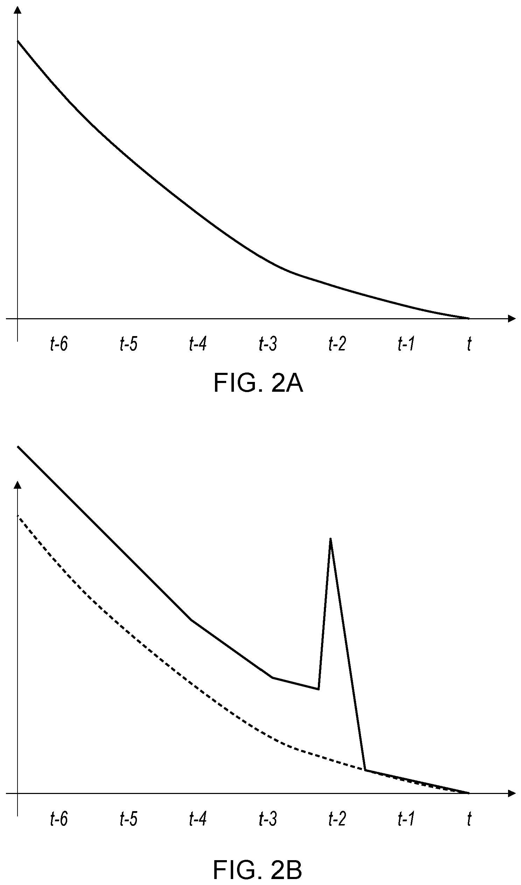

Referring now to figures 2A-C, in each case the x-axis refers to time (for example in terms of image frames counting back in time from current frame 't', and the y-axis refers to the hamming difference between adjacent image hashes.

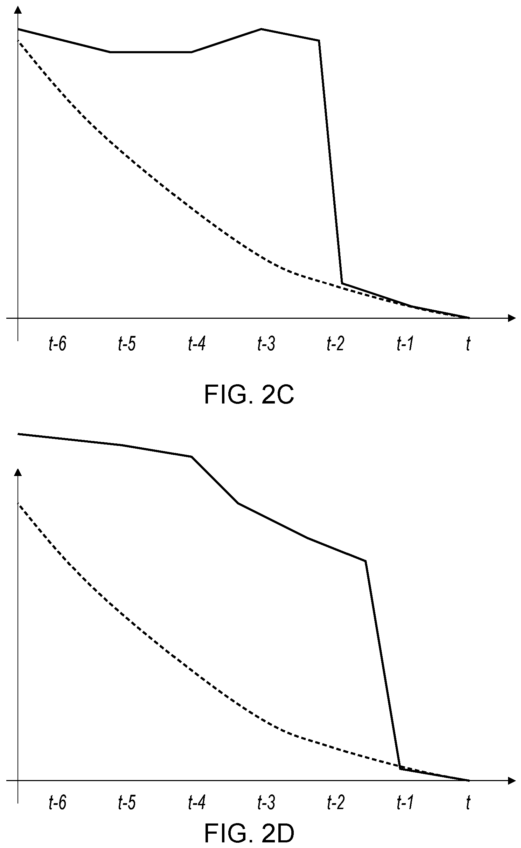

Figure 2A shows the difference between the hash for image frame t and the hash for preceding image frames within a single scene. One can see a gradual increase in difference as the scene evolves. Meanwhile Figure 2B shows an in-scene event that occurred at frame t-2 (e.g. an explosion). In this case there is a notable difference with the hash of that frame, but differences with hashes of earlier frames again show a gradual increase in difference (here with a notional offset reflecting persistent differences in the visible scene caused by the explosion in frame t-2). Finally, Figure 2C shows a genuine scene cut occurring at frame t-2. In effect, frame t-2 is uncorrelated with frame t and so the hamming distance jumps immediately to a value near 50%, and, since the earlier images in that other scene are similarly uncorrelated, the distance for those images (with some noise) are also near a hamming distance of 50% (or whatever the empirical threshold is determined to be). Consequently frame t-2 can be identified as the boundary of a scene cut.

Hence a scene change can be identified by detecting a step function in the hamming distance between the perceptual hashes of the current and N earlier image frames, where N is 2 or more (i.e. to capture a scene change at time t-1). Longer values of N given greater certainty of a scene change, up to a value of N where the scene change was long enough ago that changes in the current scene have accumulated to the point that hashes from the start of the current scene and now similarly approach a hamming distance of 50% - hence for example in the entirely exemplary scenario shown in Figures 2A-C, once the current scene is 6 frames old, it cannot be distinguished from a cut (compare in Figure 2C for example the hamming distance represented by the dotted line corresponding to the old scene from Figure 2A with the values from a scene prior to the cut represented by the solid line).

This upper bound for N may be determined empirically, or alternatively a value of N that encompasses the transitory events of the content as exemplified by Figure 2B may be used instead. Hence for example if a typical explosion is determined to last 10 frames +/- 2 frames, then optionally a value of N=15 may be used.

Finally, it will be noted that when the 'explosion' frame in Figure 2B is the current frame, then all the preceding frames look quite different, and this could be mistaken for a scene cut; this is illustrated in Figure 2D (here the explosion in frame t makes all the earlier frames in the scene look different, although there is still some correlation) . Hence again it may be preferable for the value of N to encompass the transitory events of the content as exemplified by Figure 2B, so that the current frame and preferably two or more older frames are on either side of the transitory event.

Alternatively or in addition, optionally the scene boundary represented by the step function should only be identified at a frame M or earlier (e.g. at least t-2 or earlier) as this excludes an apparent boundary caused by a current frame being a transitory event, and requires at least the preceding frames t-1 to also differ from t-2 (or more generally for the frame t-(M-1) to differ from frame t-M).

Alternatively or in addition, the scene boundary may require a sufficient difference relative to the differences for the N or M neighbouring frames; in other words, the threshold difference between images may itself be relative to the differences (e.g. an average of the differences) between other neighbouring image pairs, optionally as well as subject to a minimum absolute difference threshold based on a predetermined value or a longer term average inter-image difference. In this way the detection can calibrate itself the kinetic nature of the game or the current scene. Optionally the differences between frames can also be analysed for a change in the hash difference pattern (or whatever image or image abstraction is being used for comparison purposes); for a kinetic but continuously evolving scene, the differences in hash values (e.g. as a 2D array) are likely to look similar because the hash values will look similar; the differences will relate to the evolving changes and hence tend to be similar or neighbour the differences in the preceding comparison. By contrast a true scene change will tend to be uncorrelated between successive images, and so the successive hash values will also be uncorrelated and hence have a higher ratio of different or non-adjacent 0s and 1s. Hence a second-order comparison of hash differences can also be used to detect the nature of the difference in hash values, as an optional further indicator of a scene cut.

### Variant embodiments for detection of cuts between scenes

Alternatively or in addition to the whole image frame, the image frame may be split into subsections, such as for example a left half and a right half. This can then be used to detect a common cut between points of view in a conversation; the overall background may be similar between viewpoints, but the person framed in shot will switch from left to right; for the perspective of a half image, this will resemble a scene cut.

Similarly the central third of the image may be ignored (for example replaced with an mid-value grey in the reduced 8x8 or 32x32 image) so that significant changes (such as explosions and jump scares) are typically discounted. Meanwhile changes to the scene as a whole, such as a cut from an exterior to an interior, or from the game environment to a menu, can still be detected.

Alternatively to the technique being applied to every image, or comparing a current image to the immediately preceding image, optionally the techniques herein may be applied to every *I* images, where *I* is 2, 3, or more, optionally empirically determined based on what cumulative change over *I* images is distinguishable from a substantially complete change of content as in a scene cut.

### Step 2 - Identifying cuts for notable events

The process of identifying cuts between scenes in step 1 serves to identify candidate moments in the game for further evaluation.

Step 1 provides a hash that has been identified as representing an image from a new scene (i.e. one that scores sufficiently differently to a preceding image or set of N images).

Optionally it can also provide a hash from the preceding scene (i.e. the hash of the earlier image that was deemed different). Hence step 1 can provide both an indication of a cut between scenes and the before / after image representations.

For step 2, as a preparatory process an operator (e.g. the developer or publisher) identifies scene cuts in the game that correspond to notable events (e.g. progress the story, or start / end quests or levels, or the like). Hashes for images from these notable cuts are computed in a similar manner to those described previously and are then stored in a database. This database can be subsequently stored locally to the game for local interrogation, or optionally on a remote server configured to receive interrogation requests. It will be appreciated that because the hashes are so small, even a database comprising several hundred events would only occupy a couple of dozen kilobytes of storage.

The images corresponding to the notable cut do not need to be the image immediately following the cut; for example some cuts may involve fading in from black, or an initial scene setting moment such as an object clearing out of the way to reveal a new scene. Whilst these in themselves are images capable of being represented as hashes, they may have comparatively fewer features to reliably generate a unique or semi-unique hash from.

Hence for example an image from 10 frames, or one second, or a similar short period after the change of scene may be chosen. The period may in part depend on aspects of the game such as how long introductory text is visible on screen, or how long a fade-in sequence takes before images look normal for the game. In any event, optionally therefore the images used in the database may not be those that immediately follow a cut, but may be from shortly thereafter. If so, then similarly the hash to be provided for comparison with the database should come from a comparable period after the cut scene has been detected. Optionally only one hash may be sent for comparison, but preferably a sequence may be sent that encompasses the expected moment for hash to have been generated if in the database, and the best match in the sequence is then used. This allows for slight misalignments of time that may occur e.g. due to different frame-rates, memory or storage access delays, and the like.

Thus in summary, a database of hashes is compiled for representative images corresponding to notable events in the game, the representative images occurring at or shortly after scene cuts (or more generally above-threshold changes in image content, optionally with a change that persists for at least N frames).

The relevant event is associated with its hash in the database, either as descriptive text and/or as an ID, for example an ID usable by a help system or activity tracking system of the entertainment device's operating system.

When scene cut or equivalently an above-threshold change in image content is detected in the game, a hash or series of hashes for images around the time expected for a database image to have been created are compared with the database, and the best match is found.

If this match meets a threshold (e.g. fewer than P bits are different in the hash, where P is a positive match threshold), then the notable event is deemed to have occurred in the game.

If there is no match, or no match above this threshold, then the scene cut is assumed not to be related to a notable event.

In this way, progress within a game can be tracked by following just the video output of the game.

### Key point detection

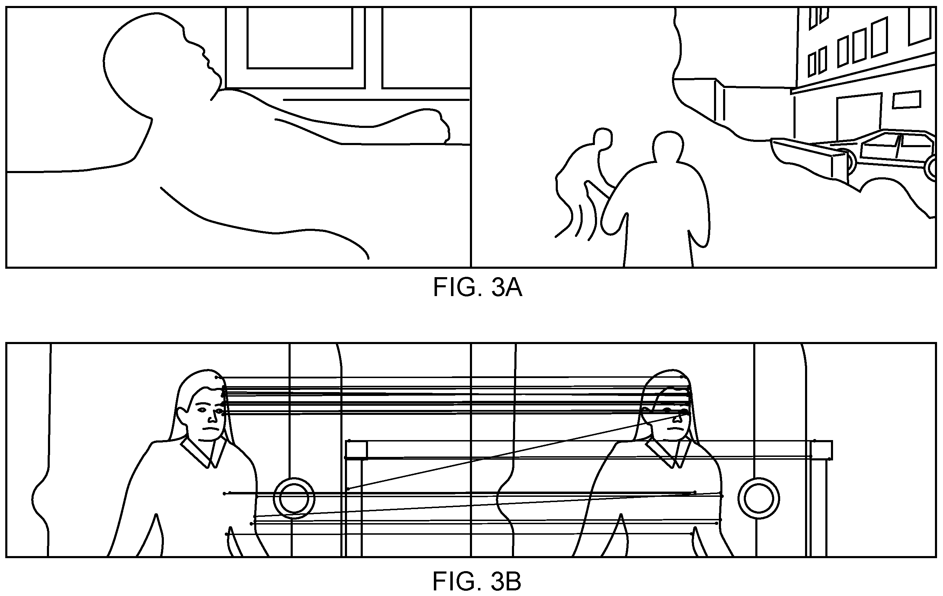

Referring now also to Figure 3, there is scope for the hash scheme to generate similar values for images that are structurally similar but have different content, such as for example the two images juxtaposed in Figure 3A.

In this case it is possible that a hash for the image on the left would achieve a positive match for a corresponding hash for the image on the right, depending on the positive match threshold used. In particular for a game where certain environments, characters, objects, textures or the like are revisited or re-used, this may result in some false-positive identifications of notable events in the database.

It will be appreciate that nevertheless, within the limited window of time following a detected scene cut the likelihood of such a match occurring is relatively low. Therefore it would be desirable for any cross-check of the perceptual hash scheme to also have a relatively low computational overhead.

Accordingly, and referring now also to Figure 3B, optionally for the images corresponding to the hashes in the database, a set of K key points may be generated, where K is for example between 10 and 100.

These key points may be generated using any suitable image quantification process, such as for example generating the top K points with a maximum change in adjacent pixel values in one or more directions; this is likely to capture crisp, high contrast edges of the image. Other criteria could be the brightest point(s), rarest colour point(s) or a point corresponding to a centroid or left- or right-most limit of an object or region of colour. Further criteria will be apparent to the skilled person.

Optionally, for the chosen criterion, they could be the top point(s) in each of K separate segments of the image, so that more parts of the image are likely to be assessed. These K segments may not represent all of the image, so that not all pixels need to be evaluated. Alternatively or in addition the parts of the image to be assessed can exclude regions that may be problematic to the key point detection technique; for example, omitting the bottom 10, 15, or 20% of the image as this is where subtitles might (or might not) be included, possibly in different languages. This therefore prevents from consideration high contrast image content that may significantly differ (or be absent) between otherwise identical moments in the game. Other regions that can differ for otherwise identical moments include user interface elements such as a health bar, equipped item icons, and the like. Accordingly, the parts of the image to be assessed can exclude regions containing such UI elements, either by generally excluding 10, 15, or 20% of the outer region of the whole image, or by excluding regions specific to the game title, for example based on a title specific configuration file. Optionally such approaches can also be used when generating the hashes as well.

Alternatively or in addition, key points can assessed only for a sub-sample of each image or segments thereof, for example only considering one particular pixel out of a square of four, nine, or sixteen pixels in the image, to further reduce the computational overhead.

These key-points are thus content specific and rely on high-frequency features of the image (the sort of features lost in the hashing process). As such they can act as a complementary check of the image, applied after it has been positively matched using the hash process; this limits the computational overhead of evaluating key points of the image from the current instance of the game as it is only performed when a match has been found using the hashes.

As illustrated in Figure 3B, the check is performed by using the same key point generation criteria on the matched image from the game as was or were used on the image in the database (in this case, maximum left-to-right change in pixel value); the coordinates of the K key points are stored in the database, and compared with the coordinates of the K key points generated for the current matched image, e.g. based on median distance between corresponding points. Optionally a predetermined number or proportion of the points with the highest differences can be discounted as outliers, as there may be marginal candidate points that are or are not selected based on very small differences in the image.

If the median distance is less than a threshold value, then the image is confirmed as a positive match. If not, it is treated as a false positive and discarded. In practice the median distance can be fairly large and still distinguish scenes that are wholly different except for their low frequency structure. This makes the process relatively robust to differences in character costume, for example. However, it may not be appropriate for all games, or for all parts of a game (for example due to significant costume customisation being available), in which case even if used elsewhere in the game, it's lack of suitability for a specific event can be signalled by not including the constellation of key points for that event's image in the database.

### Variant embodiments for identifying cuts for notable events

Whilst generating hashes is computationally efficient, comparing a hash against potentially hundreds of hashes in a game database still uses computer resources - and if a series of hashes are compared with those hundreds of hashes then the computation overhead of identifying a notable event becomes larger. Given that this is likely to happen when a scene has changed an hence when other background processes relating to accessing new game assets etc. are likely to be occurring, this is particularly undesirable.

Accordingly, the database and the search processes may be fine-tuned to reduce computational cost (and time spent searching) further.

Firstly, the database may be organised chronologically, either overall or within quests or regions, and/or may be (re)organised according to observed most frequent event sequences among a corpus of players (e.g. play-testers or early access players). The database can then be searched first from a particular point corresponding to where chronologically or in sequence the user is in the game; this is likely to result in a match that meets the positive match threshold more quickly, if one exists, and much less likely to require comparing a large number of candidate hashes. Optionally events in the database can also include pointers to other events, so that common out-of-sequence alternatives can also be quickly assessed as individual exceptions to this approach.

In addition, the database may include a 'matched' flag for its hashes - consequently once a hash in the database has been found, it is not necessary to compare with that hash again. This can also assist with determining where to start a search for the next matching hash within a chronological or sequential set of hashed events within the game, quest, region, etc., e.g. by starting with the first hash not yet found. This position within the database can also be stored to facilitate jumping in at the right point. Locations within the database can also be associated with save points and the like, if these are known to correlate with certain events.

When comparing a sequence of hashes, optionally rather than trying all of them against the database, a representative hash (e.g. of the middle image, or the image most likely to coincide with the timing of the hashed image in the database) can be used as a test hash; in this case the test hash can also search the database using any of the techniques above, but with the assumption that is may not be the best possible match within the sequence. Accordingly if the test hash meets a lower, candidate match criterion for a hash in the database (e.g. fewer than Q bits are different in the hash, where Q is a candidate match threshold and indicates more different bits that the P positive match threshold), then all the hashes in the sequence can be compared with that hash in the database, and the one with the best match (if it also meets the positive match threshold) will be identified as the relevant in-game moment. In this way a representative image from a sequence can go through the database efficiently and the full sequence of hashes is only evaluated against a hash in the database if a match appears possible.

The database may contain other flags, including but not limited to one or more selected from the list consisting of:
- Story flags, indicating that an event is particularly relevant to the story or plot;
- Achievement flags, indicating that an event is particularly relevant to an achievement;
- Failure flags, for example indicating the occurrence of a death screen;
- Save point flags, indicating to generate a game save-file; and
- Save clip flags, indicating to archive a section of video encompassing the event.

This can allow the entertainment device to evaluate what to do when an event is identified; for example not all events that are relevant to the plot may warrant creating a save file as well, and not every event may be associated with an achievement. These different flags may therefore assist when creating different content or reports for the user and/or for sharing, such as a story recap, or sharing successes with friends. Optionally some events such as player death may not have a 'found' flag, or it may be locked as not found, so that the event can be identified multiple times.

It will also be appreciated that more than one database may be used - for example different databases may be used for different areas of the game, or for different character selections, story branches, or the like. Similarly parallel instances of the database(s) may be provided for different player accounts on the same entertainment device, or parallel sets of flags within the same database, depending on implementation.

It will be appreciated that whilst the computational overhead is low, it is not necessary to perform the whole process during the period of a single frame - the task can be a background one that is completed over a number of frames, since events are rare compared to the occurrence of individual frames.

Whilst the above techniques describe using perceptual hashes and optionally key points to abstract, characterise, or fingerprint current images and database images to enable efficient comparisons, in principle the images themselves could be used for comparison purposes (either at original or reduced resolution), if storage and computational resources permit.

### Variant embodiments for notable event identification

The techniques herein describe detecting scene cuts based on a change in image content for successive images that exceeds a predetermined threshold, typically where the change is evaluated between perceptual hashes of those images. This allows for cuts to be detected by virtue of their instantaneous nature, in contrast to the ongoing evolution of a scene during normal game progression. This approach works when the comparisons are for immediately successive images, and can work for images separated by one or more intervening images (i.e. a subsample of images), up to a point where the correlation between the subsampled images starts to get lost and instead appear to look more like different scenes.

In other words, there is a practical limit to how sparsely the successive images can be sampled from the stream of generated image using the above technique. However, it will be appreciated that sampling fewer images could reduce computational and memory overheads.

Conversely however, it will also be appreciated that if one only sampled, for instance, every 30^{th} frame (in a 60 frame per second image generation sequence), i.e. every half second, or event every second, the sampled frames are likely to be very different to each other and so the detection of cuts and so the detection of cuts would no longer be possible using the technique of comparing perceptual hashes of successive sampled images for a threshold difference.

Hence in this case, where the sample period is too long to reliably detect a cut, an alternative approach may be considered:
In embodiments of the present description, images are periodically sampled (e.g. every half second or second), and processed as before to generate a perceptual hash and optionally also key points.

The perceptual hash is then compared with the hashes in the database - using any of the techniques herein - to identify any match. Optionally because the sample image may be more variable relative to actual scene cut compared to an image selected in response to active detection of the scene cut, and hence the sample image may not correspond exactly to the image represented in the database, the predetermined threshold for denoting a match may be lower in this case.

The periodic sampling may optionally include variability based on current computational or memory load; for example if the notional period is every 30 frames, then the first frame in the 25-30^{th} frame in which a computational and/or memory overhead of predetermined capacity was available would be the frame in which the techniques herein would be implemented. This reduces the risk of the resource requirements of the process clashing with those of a high-demand video frame. The precise frame window position and length may be determined empirically for the intended periodicity.

It will be appreciated that the techniques herein comprise two main phases; obtaining and processing current images to create perceptual hashes, and comparing these with one or more reference databases. When actively searching for scene cuts to detect candidate event images, there is a greater resource requirement for image processing, but relatively few instances of comparison with the database (since this will only occur when a cut is detected). By contrast when only using a sample image every 1 or ½ second irrespective of a cut, there is less image processing overall, but the database is interrogated every time and potentially more completely since there is statistically less likely to be a detected match for any given candidate image and so strategies for reducing the comparisons are not likely to see much benefit. Therefore which approach to use may depend of the image processing capacity of the system and/or the size of the database or databases.

It will also be appreciated that this variant approach may therefore benefit from the use of multiple smaller databases, e.g. quest or level / location dependent. Hence a step of obtaining a database of data items may comprise obtaining one of a plurality of databases, responsive to the predetermined events it contains, and data identifying a state of a source of the sequence of images (i.e. the game state such as the quest or level / location, or e.g. the identify of a programme episode if the images are from a pre-recorded media series or the like).

It will be appreciated that both approaches may be used interchangably, for example depending on the database size, the available processing / memory resources, or the like, which can vary dynamically within a single game, or between different game titles.

### Uses for identified notable events

As noted above, a number of reports and digests may be possible based on these events, as well as actions such as saving the game state of a video clip.

Hence identified events may be used to trigger one or more further actions in or for the game. For example, a save game might be automatically generated. This can also be used to easily update save points once a game has been released, by making an updated database available.

In another example, at least some of the user's in-game statistics may be captured at this point; this can allow for comparisons of progress throughout the game, or add further context to a subsequent summarisation; for example saying ('When <player> entered the city, she was at full health, but only had 3 dollars to her name').

Such a summarisation system is outside the scope of this application but may for example identify specific statistics to include for some events, and/or look for relative outliers in the player's statistics when compared to a wider corpus of other players at the same point in-game, to identify interesting differences.

The identified events can also be used to tag video being recorded on a loop during game play, so that if it is subsequently searched for (either within the loop or if subsequently archived) it can easily be found.

Such tagging can also be used to selectively archive video clips that capture such notable moments, to assist with a summary of game play or a recap to help remind the player of what has happened, for example if they have been on holiday and not played the game for a while.

Other uses will be apparent to the skilled person, such as providing telemetry for the developer or publisher - for example providing information, across a corpus of players, relating to preferred routes or sequences, sections that take longer or shorter than expected to complete (or vary based on other criteria such as player age), and sections that appear to be where players stop playing the game (if other than after completion). Such information can help the developer improve the game in subsequent updates or sequels.

In addition to analysing game images whilst being generated by an entertainment device, it will be appreciated that this approach can also be used on videos uploaded to hosting sites such as YouTube^{®} and Twitch^{®}. Accordingly it becomes possible to automatically catalogue what parts of a game a given video encompasses. This can enable a subsequent viewer to access more useful videos or parts of videos.

For example, if a user is stuck on a particular part of the game, a help option could send a search request to one or more online video hosting sites such as those mentioned above, and/or a site dedicated to providing help videos and walkthroughs, and receive one or more hits for videos or parts thereof that correspond to the part of the game they are in. This avoids the need for the user themselves to know or understand what part of the game they are in, or how to phrase this in a way that would generate relevant results on a search. It can also allow users to find videos posted (and described by) people using different languages, because the event identification via the database is not language dependent.

### Summary

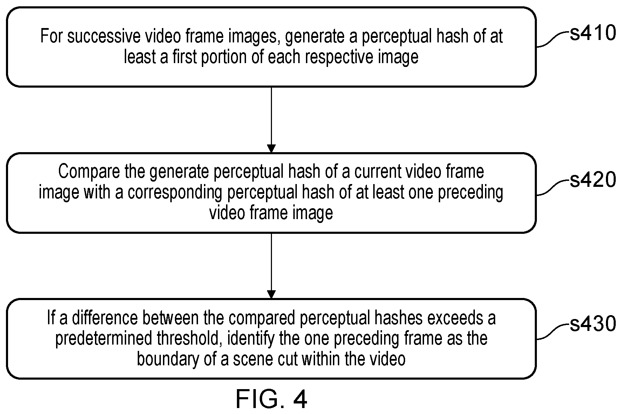

In a summary embodiment of the present description, referring now to Figure 4 a preliminary method comprises identifying scene cuts within a video (either pre-recorded or generated by a videogame), and the method comprises the steps of:
- In a first step s410, for each video frame image, generate a hash (e.g. perceptual hash) of at least a first portion of a respective image, as described elsewhere herein;
- In a second step s420, compare the generated hash of a current video frame image with a corresponding perceptual hash of at least one preceding video frame image (e.g. the immediately preceding video frame), as described elsewhere herein; and
- In a third step s430, if a difference between the compared hashes exceeds a predetermined threshold, identify the one preceding video frame as the boundary of a scene cut within the video, as described elsewhere herein.

It will be apparent to a person skilled in the art that variations in the above method corresponding to operation of the various embodiments of the apparatus as described and claimed herein are considered within the scope of the present invention, including but not limited to that:
- the perceptual hash is based on spatial features of a video frame image;
- the perceptual hash is based on frequency features of a video frame image;
- the perceptual hash of the current video frame image is compared with N preceding video frame images, where N is at least 2;
   - in this case, optionally the step of identifying the one preceding video frame as the boundary of a scene cut within the video comprises detecting a step function in the difference between the perceptual hash of the current video frame image and of the N preceding video frame images, that occurs at the one preceding video frame; and
- the at least a first portion of a respective image is one or more of a left and a right half of the image, and the image excluding a central portion.

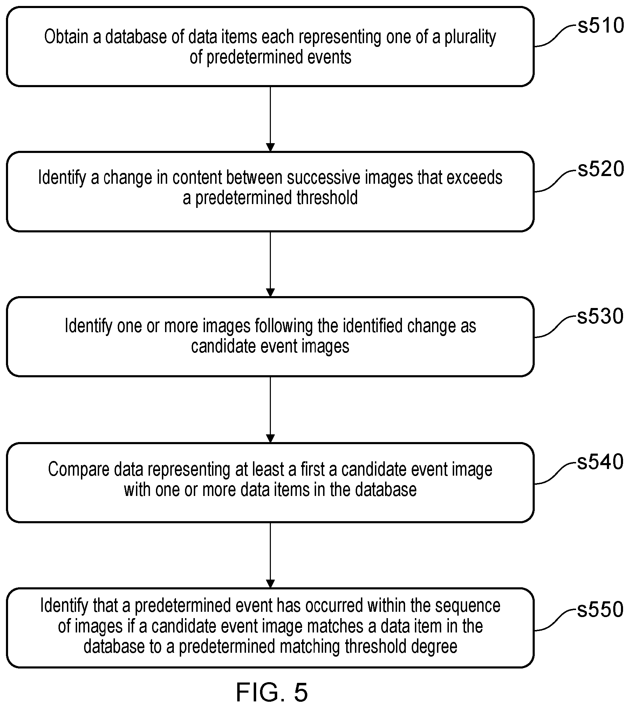

Referring now to Figure 5, in a summary embodiment of the present description, a method of identifying a predetermined event within a sequence of images, comprising the following steps.

In a first step s510, obtaining a database of data items each representing one of a plurality of predetermined events, as described elsewhere herein.

In a next step, identifying candidate event images within the sequence of images. Optionally this can take the form of the following second and third steps (as shown in Figure 5):
In a second step s520, identifying a change in content between successive images that exceeds a predetermined threshold (e.g. a scene cut), as described elsewhere herein;
In a third step s530, identifying one or more images following the identified change as candidate event images, as described elsewhere herein;
Alternatively, optionally it can take the form of selecting individual images separated by a plurality of images in the sequence of images as candidate event images (e.g. periodically or semi-periodically based on resource availability, as described elsewhere herein).

In a fourth step s540, comparing data representing at least a first a candidate event image with one or more data items in the database, as described elsewhere herein; and

In a fifth step s550, identifying that a predetermined event has occurred within the sequence of images if a candidate event image matches a data item in the database to a predetermined matching threshold degree (e.g. the positive match threshold), as described elsewhere herein.

It will be apparent to a person skilled in the art that variations in the above method corresponding to operation of the various embodiments of the apparatus as described and claimed herein are considered within the scope of the present invention, including but not limited to that:
- the data items in the database are perceptual hashes of images representing respective predetermined events, and the data representing at least a first a candidate event image is a corresponding perceptual hash, as described elsewhere herein;
   - in this case, optionally the hashes are one of a spatial hash or a frequency domain hash, as described elsewhere herein;
   - similarly in this case, optionally the step of identifying a change in content comprises identifying a step change in differences between perceptual hashes for at least a part of the sequence of images that persists for a predetermined number of images, as described elsewhere herein (e.g. with respect to Figure 2C);
   - similarly in this case, optionally a perceptual hash is generated for one or more selected from the list consisting of a left or right subsection of an image, a top or bottom subsection of an image, one or more quadrants of an image, and an image excluding a central region thereof, as described elsewhere herein (and hence one image can optionally give rise to several hashes for comparison purposes, in which case the identification may use an AND principle or and OR, principle for matches);
- a data item representing a predetermined event corresponds to an image that occurs a predetermined period after a change in content between successive images that exceeds a predetermined threshold, and the step of identifying one or more images following the identified change as candidate event images is responsive to that predetermined period, as described elsewhere herein;
- the database comprises an event ID for each predetermined event, and the method comprises the step of notifying the event ID of an identified event to one or more selected from the list consisting of a user-help process (e.g. to find help video and/or help text), a game summarisation process (e.g. to generate a story-so-far video and/or text); a social feed process (e.g. to share achievements, failures, and/or notable stats of the user with others), a save-game process; a save video-feed process, and a telemetry process, as described elsewhere herein;
- for each predetermined event, the database comprises one or more flags selected from the list consisting of an event identified flag, a story-related event flag, an achievement related event flag, a failure related event flag, a save game flag, and a save video clip flag, as described elsewhere herein;
- for each image representing a respective predetermined event, the database comprises key point data comprising pixel location data for K pixels of the image that best meet a predetermined criterion, and the method comprises the steps of: if a candidate event image matches a data item in the database to a predetermined threshold degree, then calculating corresponding key point data for that candidate event image, calculating the average difference between pixel locations for at least a subset of pixel locations in the key point data from the candidate event image and the key point data corresponding to the matched data item, and if the average difference exceeds a predetermined difference threshold, rejecting the candidate event image as a false positive, and identifying that the event has not occurred, as described elsewhere herein;
- the predetermined events are ordered within the database according to one or more criteria selected from the list consisting of chronological sequence of occurrence within the game as a whole, chronological sequence of occurrence within one of a region, level, quest, or story branch of the game, empirically measured most likely sequence of occurrence within the game as a whole, and empirically measured most likely sequence of occurrence within one of a region, level, quest, or story branch of the game; and the step of comparing data representing at least a first a candidate event image with one or more data items in the database comprises starting the search within the database at a position responsive to the current game state and the sequence of occurrence used within the database, as described elsewhere herein;
- the database comprises an event identified flag for at least some of the predetermined events, and the step of identifying that an event as having occurred comprises setting the event identified flag, wherein the method comprises the step of not comparing data representing at least a first a candidate event image with a data item in the database for which its event identified flag has been set, as described elsewhere herein;
- a plurality of images following the identified change are candidate event images; and the method comprises the steps of selecting a sample candidate event image from that plurality of candidate event images, comparing data representing the sample candidate event image with one or more data items in the database, identifying that a predetermined event has possibly occurred within the sequence of images the sample candidate event image matches a data item in the database to a predetermined sample threshold degree lower than the predetermined matching threshold degree, comparing data representing the remaining candidate event images with the data items for the event that has possibly occurred, and identifying that this event as having occurred if any of the candidate event image matches the corresponding data item in the database to a predetermined matching threshold degree, as described elsewhere herein; and
- the sequence of images are from a video that has been uploaded to a video hosting site; and the method comprises the step of generating search metadata for the video indicating when within the video at least a subset of identified events have occurred, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring now again to Figure 1, in a summary embodiment of the present description a system (e.g. entertainment device 10) for identifying a predetermined event within a sequence of images, comprises a processor (e.g. CPU 20) configured (for example by suitable software instruction) to implement the following steps:
- obtaining (for example from SSD 50 or over a network via data port 60) a database of data items each representing one of a plurality of predetermined events, as described elsewhere herein;
- identifying a change in content between successive images that exceeds a predetermined threshold, as described elsewhere herein;
- identifying one or more images following the identified change as candidate event images, as described elsewhere herein;
- comparing data representing at least a first a candidate event image with one or more data items in the database, as described elsewhere herein; and
- identifying that a predetermined event has occurred within the sequence of images if a candidate event image matches a data item in the database to a predetermined matching threshold degree, as described elsewhere herein.

Instances of this summary embodiment implementing the methods and techniques described herein (for example by use of suitable software instruction) are envisaged within the scope of the application, including but not limited to that the data items are perceptual hashes of images representing respective predetermined events, and the data representing at least a first a candidate event image is a corresponding perceptual hash.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

### EMBODIMENTS

Although the present invention is defined in the claims, it should be understood that the present invention can also (alternatively) be defined in accordance with the following embodiments:
1. A method of identifying a predetermined event within a sequence of images, comprising the steps of:
   obtaining a database of data items each representing one of a plurality of predetermined events;
   identifying candidate event images within the sequence of images;
   comparing data representing at least a first a candidate event image with one or more data items in the database; and
   identifying that a predetermined event has occurred within the sequence of images if a candidate event image matches a data item in the database to a predetermined matching threshold degree.
2. The method of embodiment 1, in which the step of identifying candidate event images within the sequence of images comprises the steps of:
   identifying a change in content between successive images that exceeds a predetermined threshold; and
   identifying one or more images following the identified change as candidate event images.
3. The method of embodiment 1, in which the step of identifying candidate event images within the sequence of images comprises the step of:
   selecting individual images separated by a plurality of images in the sequence of images as candidate event images.
4. The method of any preceding embodiment, in which:
   the data items are perceptual hashes of images representing respective predetermined events; and
   the data representing at least a first a candidate event image is a corresponding perceptual hash.
5. The method of embodiment 2, in which the step of identifying a change in content comprises:
   identifying a step change in differences between perceptual hashes for at least a part of the sequence of images that persists for a predetermined number of images.
6. The method of embodiment 4, in which a perceptual hash is generated for one or more selected from the list consisting of:
   i. a left or right subsection of an image;
   ii. a top or bottom subsection of an image;
   iii. one or more quadrants of an image; and
   iv. an image excluding a central region thereof.
7. The method of embodiment 2, in which;
   a data item representing a predetermined event corresponds to an image that occurs a predetermined period after a change in content between successive images that exceeds a predetermined threshold; and
   the step of identifying one or more images following the identified change as candidate event images is responsive to that predetermined period.
8. The method of any preceding embodiment, in which:
   the database comprises an event ID for each predetermined event, and the method comprises the step of:
   notifying the event ID of an identified event to one or more selected from the list consisting of:
   i. a user-help process;
   ii. a game summarisation process;
   iii. a social feed process;
   iv. a save-game process;
   v. a save video-feed process; and
   vi. a telemetry process.
9. The method of any preceding embodiment, in which:
   for each predetermined event, the database comprises one or more flags selected from the list consisting of:
   i. an event identified flag;
   ii. a story-related event flag;
   iii. an achievement related event flag;
   iv. a failure related event flag;
   v. a save game flag; and
   vi. a save video clip flag.
10. The method of any preceding embodiment, in which
   for each image representing a respective predetermined event, the database comprises key point data comprising pixel location data for K pixels of the image that best meet a predetermined criterion;
   and the method comprises the steps of:
      if a candidate event image matches a data item in the database to a predetermined threshold degree, then
      calculating corresponding key point data for that candidate event image;
      calculating the average difference between pixel locations for at least a subset of pixel locations in the key point data from the candidate event image and the key point data corresponding to the matched data item; and
      if the average difference exceeds a predetermined difference threshold,
      rejecting the candidate event image as a false positive, and identifying that the event has not occurred.
11. The method of any preceding embodiment, in which:
   the predetermined events are ordered within the database according to one or more criteria selected from the list consisting of:
      i. chronological sequence of occurrence within the game as a whole;
      ii. chronological sequence of occurrence within one of a region, level, quest, or story branch of the game;
      iii. empirically measured most likely sequence of occurrence within the game as a whole; and
      iv. empirically measured most likely sequence of occurrence within one of a region, level, quest, or story branch of the game, and
   the step of comparing data representing at least a first a candidate event image with one or more data items in the database comprises starting the search within the database at a position responsive to the current game state and the sequence of occurrence used within the database.
12. The method of any preceding embodiment, in which the database comprises an event identified flag for at least some of the predetermined events, and
   the step of identifying that an event as having occurred comprises setting the event identified flag;
   wherein the method comprises the step of
   not comparing data representing at least a first a candidate event image with a data item in the database for which its event identified flag has been set.
13. The method of embodiment 2, in which a plurality of images following the identified change are candidate event images; the method comprising the steps of:
   selecting a sample candidate event image from that plurality of candidate event images;
   comparing data representing the sample candidate event image with one or more data items in the database;
   identifying that a predetermined event has possibly occurred within the sequence of images the sample candidate event image matches a data item in the database to a predetermined sample threshold degree lower than the predetermined matching threshold degree;
   comparing data representing the remaining candidate event images with the data items for the event that has possibly occurred; and
   identifying that this event as having occurred if any of the candidate event image matches the corresponding data item in the database to a predetermined matching threshold degree.
14. The method of any preceding embodiment in which the sequence of images are from a video that has been uploaded to a video hosting site; and the method comprises the step of:
   generating search metadata for the video indicating when within the video at least a subset of identified events have occurred.
15. The method of any preceding embodiment in which the step of obtaining a database of data items comprises:
   obtaining one of a plurality of databases, responsive to the predetermined events it contains and data identifying a state of a source of the sequence of images.
16. A computer program comprising computer executable instructions adapted to cause a computer system to perform the method of any one of the preceding embodiments.
17. A system for identifying a predetermined event within a sequence of images, comprising a processor configured to implement the steps of:
   obtaining a database of data items each representing one of a plurality of predetermined events;
   identifying candidate event images within the sequence of images;
   comparing data representing at least a first a candidate event image with one or more data items in the database; and
   identifying that a predetermined event has occurred within the sequence of images if a candidate event image matches a data item in the database to a predetermined matching threshold degree.
18. The system of embodiment 17, in which the step of identifying candidate event images within the sequence of images comprises the steps of:
   identifying a change in content between successive images that exceeds a predetermined threshold;
   identifying one or more images following the identified change as candidate event images;
19. The system of embodiment 17, in which the step of identifying candidate event images within the sequence of images comprises the step of:
   selecting individual images separated by a plurality of images in the sequence of images as candidate event images.

## Claims

1. A method of identifying a predetermined event within a sequence of images, the method comprising:
obtaining (s510) a database of data items each representing one of a plurality of predetermined events;
identifying candidate event images within the sequence of images;
comparing (s540) data representing at least a first a candidate event image with one or more data items in the database; and
identifying (s550) that a predetermined event has occurred within the sequence of images if a candidate event image matches a data item in the database to a predetermined matching threshold degree.

2. The method of claim 1, in which identifying candidate event images within the sequence of images comprises:
identifying (s520) a change in content between successive images that exceeds a predetermined threshold; and
identifying (s530) one or more images following the identified change as candidate event images.

3. The method of claim 1, in which identifying candidate event images within the sequence of images comprises:
selecting individual images separated by a plurality of images in the sequence of images as candidate event images.

4. The method of any preceding claim, in which:
the data items are perceptual hashes of images representing respective predetermined events; and
the data representing at least a first a candidate event image is a corresponding perceptual hash;
optionally in which identifying a change in content comprises identifying a step change in differences between perceptual hashes for at least a part of the sequence of images that persists for a predetermined number of images; and/or
in which a perceptual hash is generated for one or more selected from a list consisting of:
i. a left or right subsection of an image;
ii. a top or bottom subsection of an image;
iii. one or more quadrants of an image; and
iv. an image excluding a central region thereof.

5. The method of claim 2, in which;
a data item representing a predetermined event corresponds to an image that occurs a predetermined period after a change in content between successive images that exceeds a predetermined threshold; and
identifying one or more images following the identified change as candidate event images is responsive to that predetermined period.

6. The method of any preceding claim, in which:
the database comprises an event ID for each predetermined event, and the method comprises:
notifying the event ID of an identified event to one or more selected from a list consisting of:
i. a user-help process;
ii. a game summarisation process;
iii. a social feed process;
iv. a save-game process;
v. a save video-feed process; and
vi. a telemetry process.

7. The method of any preceding claim, in which:
for each predetermined event, the database comprises one or more flags selected from a list consisting of:
i. an event identified flag;
ii. a story-related event flag;
iii. an achievement related event flag;
iv. a failure related event flag;
v. a save game flag; and
vi. a save video clip flag.

8. The method of any preceding claim, in which
for each image representing a respective predetermined event, the database comprises key point data comprising pixel location data for K pixels of the image that best meet a predetermined criterion;
and the method comprises:
if a candidate event image matches a data item in the database to a predetermined threshold degree, then
calculating corresponding key point data for that candidate event image;
calculating the average difference between pixel locations for at least a subset of pixel locations in the key point data from the candidate event image and the key point data corresponding to the matched data item; and
if the average difference exceeds a predetermined difference threshold,
rejecting the candidate event image as a false positive, and identifying that the event has not occurred.

9. The method of any preceding claim, in which:
the predetermined events are ordered within the database according to one or more criteria selected from a list consisting of:
i. chronological sequence of occurrence within the game as a whole;
ii. chronological sequence of occurrence within one of a region, level, quest, or story branch of the game;
iii. empirically measured most likely sequence of occurrence within the game as a whole; and
iv. empirically measured most likely sequence of occurrence within one of a region, level, quest, or story branch of the game, and
comparing data representing at least a first a candidate event image with one or more data items in the database comprises starting the search within the database at a position responsive to the current game state and the sequence of occurrence used within the database.

10. The method of any preceding claim, in which the database comprises an event identified flag for at least some of the predetermined events, and
identifying that an event as having occurred comprises setting the event identified flag;
wherein the method comprises
not comparing data representing at least a first a candidate event image with a data item in the database for which its event identified flag has been set.

11. The method of claim 2, in which a plurality of images following the identified change are candidate event images; the method comprising:
selecting a sample candidate event image from that plurality of candidate event images;
comparing data representing the sample candidate event image with one or more data items in the database;
identifying that a predetermined event has possibly occurred within the sequence of images the sample candidate event image matches a data item in the database to a predetermined sample threshold degree lower than the predetermined matching threshold degree;
comparing data representing the remaining candidate event images with the data items for the event that has possibly occurred; and
identifying that this event as having occurred if any of the candidate event image matches the corresponding data item in the database to a predetermined matching threshold degree.

12. The method of any preceding claim in which the sequence of images are from a video that has been uploaded to a video hosting site; and the method comprises:
generating search metadata for the video indicating when within the video at least a subset of identified events have occurred.

13. The method of any preceding claim in which obtaining a database of data items comprises:
obtaining one of a plurality of databases, responsive to the predetermined events it contains and data identifying a state of a source of the sequence of images.

14. A computer program comprising computer executable instructions adapted to cause a computer system to perform the method of any one of the preceding claims.

15. A system for identifying a predetermined event within a sequence of images, comprising a processor configured to perform the method of any one of claims 1 to 13.
